(19) Europäisches Patentamt
European Patent Office
Office européen des brevets

(11) **EP 3 645 354 B1**

(12) **EUROPÄISCHE PATENTSCHRIFT**

(45) Veröffentlichungstag und Bekanntmachung des Hinweises auf die Patenterteilung:
**21.04.2021 Patentblatt 2021/16**

(21) Anmeldenummer: **18737154.7**

(22) Anmeldetag: **12.06.2018**

(51) Int Cl.:
***B60T 13/66*** *(2006.01)* ***B60T 17/22*** *(2006.01)*
***G01L 5/28*** *(2006.01)*

(86) Internationale Anmeldenummer:
**PCT/EP2018/065539**

(87) Internationale Veröffentlichungsnummer:
**WO 2019/001951 (03.01.2019 Gazette 2019/01)**

(54) **SCHIENENFAHRZEUG MIT SENSOREINRICHTUNG ZUR MESSUNG VON REIBUNGSBREMSKRÄFTEN EINER REIBUNGSBREMSEINRICHTUNG**

RAIL VEHICLE WITH SENSOR DEVICE FOR MEASURING FRICTION BRAKING FORCES OF A FRICTION BRAKING DEVICE

VÉHICULE FERROVIAIRE PRÉSENTANT UN DISPOSITIF CAPTEUR POUR LA MESURE DE FORCES DE FREINAGE PAR FRICTION D'UN DISPOSITIF DE FREINAGE À FRICTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2017 DE 102017114610**
**29.09.2017 DE 102017009127**

(43) Veröffentlichungstag der Anmeldung:
**06.05.2020 Patentblatt 2020/19**

(73) Patentinhaber: **KNORR-BREMSE**
**Systeme für Schienenfahrzeuge GmbH**
**80809 München (DE)**

(72) Erfinder:
• **ARTRU, Philippe**
**80797 München (DE)**
• **LOEBNER, Reinhard**
**81829 München (DE)**

(56) Entgegenhaltungen:
**DE-A1-102013 008 227 DE-A1-102013 213 618**
**DE-C1- 4 418 791 JP-A- H10 267 767**

**Beschreibung**

Die Erfindung geht aus von einem Schienenfahrzeug mit einer von einer elektronischen Steuereinrichtung gesteuerten reibungskraftbasierten Bremseinrichtung, gemäß dem Oberbegriff von Anspruch 1.

Ein solches Schienenfahrzeug mit einer solchen reibungskraftbasierten Bremseinrichtung ist beispielsweise aus DE 10 2013 008 227 A1 bekannt. Dort ist die Bremszange mit dem Bremsgehäuse an zumindest einer ersten Lagerstelle und einer zweiten Lagerstelle gelagert, wobei die zweite Lagerstelle in einem vordefinierten Lagerabstand von der ersten Lagerstelle beabstandet ist, wobei an dem Bremsgehäuse oder zwischen diesem und der Konsole ein erster Sensor zum Bereitstellen eines ersten Messsignals und ein zweiter Sensor zum Bereitstellen eines zweiten Messsignals angeordnet sind. Das erste Messsignal und das zweite Messsignal repräsentieren je eine Kraft, insbesondere eine Lagerkraft, oder eine davon abgeleitete Größe. Das Bremsmoment wird auf der Basis des ersten Messsignals, des zweiten Messsignals, eines Einbaumaßes und des Lagerabstands bestimmt, wobei das Einbaumaß dem Abstand zwischen einer Drehachse der Bremsscheibe und der ersten Lagerstelle entspricht. Hierzu ist das Bremsgehäuse mittels eines ersten Messbolzens und eines zweiten Messbolzens an den beiden Lagerstellen befestigt. Bei einem Defekt eines oder beider Messbolzen muss dann das Bremsgehäuse mit der Bremszange komplett demontiert werden. Außerdem ist die Kalibrierung der Messbolzen abhängig von der Bauart und Größe der Bremseinrichtung (Bremszange, Bremsgehäuse, Bremsscheibe und Bremsbeläge).

DE 44 18 791 C1 offenbart ein Bremsgehäuse, das einerseits durch eine Gelenklagerung an einer Fahrzeugachse gelenkig und andererseits durch einen Sensor einer Sensoreinrichtung tragende Stütze derart gelagert ist, dass infolge der durch den Reibkontakt des Bremsbelags mit der Bremsscheibe entstehenden Reibungsbremskraft ein Drehmoment auf das Bremsgehäuse um die Gelenklagerung sowie eine hieraus resultierende Reaktionskraft in der Stütze erzeugt werden, welche der Sensor direkt oder indirekt misst. DE 10 2013 213618 A1 offenbart einen Kraftsensor in einem Hebelarm und JP H10 267767 A ein Bremsgehäuse, welches nicht gelenkig an derselben Konsole wie eine Stütze angeordnet ist.

Der Erfindung liegt die Aufgabe zugrunde, ein Schienenfahrzeug mit einer verbesserten Anordnung für die Sensorvorrichtung zur Verfügung zu stellen.

Diese Aufgabe wird erfindungsgemäß durch die Merkmale von Anspruch 1 gelöst. Vorteilhafte Weiterbildungen der Erfindung sind Gegenstand der beigefügten Unteransprüche.

OFFENBARUNG DER ERFINDUNG

Die Erfindung geht aus von einem Schienenfahrzeug mit einer von einer elektronischen Steuereinrichtung gesteuerten reibungskraftbasierten Bremseinrichtung, welche wenigstens eine einem Rad oder einem Radsatz zugeordnete und über eine Konsole an einem Fahrwerk festgelegte Scheibenbremseinrichtung aufweist, welche wenigstens einen mit einer Bremsscheibe zum Bremszuspannen in Reibkontakt und zum Bremslösen außer Reibkontakt tretenden Bremsbelag, eine mit dem wenigstens einen Bremsbelag verbundene Bremszange sowie ein Bremsgehäuse umfasst, an welchem die Bremszange gelagert ist, wobei beim Reibkontakt des wenigstens einen Bremsbelags mit der Bremsscheibe eine Reibungsbremskraft und/oder ein Reibungsbremsmoment erzeugt wird, sowie eine wenigstens einen Sensor umfassende Sensoreinrichtung, welche die Reibungsbremskraft und/oder das Reibungsbremsmoment oder eine von der Reibungsbremskraft und/oder von dem Reibungsbremsmoment abgeleitete Größe direkt oder indirekt erfasst und ein von der erfassten Reibungsbremskraft und/oder von dem erfassten Reibungsbremsmoment oder von der erfassten abgeleiteten Größe abhängiges elektrisches Kraftsignal erzeugt und in die elektronische Steuereinrichtung einsteuert.

Erfindungsgemäß ist das Bremsgehäuse an der Konsole einerseits durch eine Gelenklagerung gelenkig und andererseits durch eine den wenigstens einen Sensor der Sensoreinrichtung tragende Stütze derart gelagert, dass infolge der durch den Reibungskontakt des wenigstens einen Bremsbelags mit der Bremsscheibe entstehenden Reibungsbremskraft ein Drehmoment auf das Bremsgehäuse um die Gelenklagerung sowie eine hieraus resultierende Reaktionskraft in der Stütze erzeugt werden, welche der wenigstens eine Sensor der Sensoreinrichtung direkt oder indirekt misst und die Sensoreinrichtung basierend auf der Reaktionskraft das Kraftsignal erzeugt.

Mit anderen Worten wird dem Bremsgehäuse aufgrund der der durch den Reibungskontakt des wenigstens einen Bremsbelags mit der Bremsscheibe entstehenden Reibungsbremskraft ein um die Gelenklagerung herum wirkendes Drehmoment aufgeprägt, welches in der Stütze die Reaktionskraft hervorruft.

Die Vorteile der erfindungsgemäßen Maßnahmen liegen darin, dass bedingt durch die Anordnung des wenigstens einen Sensor der Sensoreinrichtung auf, an oder innerhalb der Stütze ein einfacher Austausch und eine einfache Nachrüstung einer solchen Sensoreinrichtung gegeben ist, um die Reibungsbremskräfte bzw. Reibungsbremsmomente im Stillstand und/oder in beliebigen Anfahr-, Fahr-, und Bremssituationen des Schienenfahrzeugs als Kraftsignal zu erfassen und zu verarbeiten. Bei einem Austausch der Sensoreinrichtung beispielsweise aufgrund eines Defekts ist es insbesondere nicht notwendig, die Scheibenbremseinheit aus Bremsgehäuse, Bremszange, Bremsscheibe und Bremsbeläge von der Gelenklagerung zu demontieren. Insbesondere ist auch die Kalibrierung der Sensoreinrichtung bzw. des Sensors unabhängig von der Bauart und Baugröße der Bremseinheit möglich. Nicht zuletzt kann auch die Bremseinheit ausgewechselt werden, ohne dass die Stütze mit dem wenigstens einen Sensor ausgewechselt bzw. von der Konsole demontiert werden muss.

Die die in den Unteransprüchen aufgeführten Merkmale sind vorteilhafte Weiterbildungen der in dem unabhängigen Patentanspruch angegebenen Erfindung aufgeführt.

Beispielsweise ist die Stütze mit ihrem einen Ende am Bremsgehäuse und mit ihrem anderen Ende am Fahrwerk derart gelenkig gelagert, dass zwischen einer Längsachse der Stütze und der Gelenklagerung des Bremsgehäuses ein Hebelarm ausgebildet wird.

Die elektronische Steuereinrichtung ist dann bevorzugt ausgebildet, dass sie die Reibungsbremskraft und/oder das Reibungsbremsmoment oder die hiervon abgeleitete Größe abhängig von dem zwischen der Gelenklagerung und der Stütze wirkenden Hebelarm bestimmt.

Der wenigstens eine Sensor der Sensoreinrichtung wird bevorzugt durch einen Kraftmesssensor wie einen Dehnmessstreifen oder einen auf der Basis der Dünnfilmtechnik arbeitenden Sensor gebildet.

Der wenigstens eine Sensor der Sensoreinrichtung kann auf, an oder innerhalb der Stütze angeordnet sein. Die Stütze selbst kann durch einen hohlen Körper oder durch einen Körper aus Vollmaterial gebildet werden. Das Material und die Geometrie der Stütze bestimmt der Fachmann bestenfalls abhängig von der Belastung durch die Reaktionskraft. Anzustreben ist eine reine Zug- oder Druckbelastung durch die Reaktionskraft, so dass dann die Stütze mechanisch wie ein Zug-/Druckstab wirkt.

Das elektrische Kraftsignal kann dann in der elektronischen Steuereinrichtung ausgewertet werden. Insbesondere erfolgt die Auswertung im Hinblick auf eine Überwachung von Fahr- und Bremssituationen und/oder des Stillstands und/oder von Anfahrvorgängen des Schienenfahrzeugs.

Vorzugsweise kann daher der wenigstens eine Sensor der Sensoreinrichtung wenigstens beim Bremsen und/oder im Stillstand und/oder beim Anfahren und/oder in Fahrt des Schienenfahrzeugs die Reibungsbremskraft und/oder das Reibungsbremsmoment direkt oder indirekt messen und abhängig davon die Sensoreinrichtung das Kraftsignal erzeugen.

In DE 10 2009 005 624 A1 wird ausgeführt, dass beim Anfahren von Schienenfahrzeugen aus dem Stillstand vor allem an Gefällen und Steigungen die Traktionskraft des Traktionsantriebs und die Bremskraft koordiniert gesteuert werden muss, um zu verhindern, dass das Schienenfahrzeug beim Anfahren z.B. an einer Steigungsstrecke zurückrollt. Es kann dabei insbesondere zu einem ruckartigen Anfahren kommen, das den Komfort für die Fahrgäste beeinträchtigt. Es ist deshalb vorgeschlagen worden, die Steuerung der Bremskraft und die Steuerung der Traktionskraft aufeinander abzustimmen, um einerseits ein Zurückrollen zu vermeiden und andererseits den Komfort zu verbessern.

Damit wird eine sog. Anfahrhilfefunktion oder eine Berganfahrhilfefunktion oder ein Berganfahrassistent (engl. Hill Holder, Hill Hold Control, Hill Start Assist oder Hill Start Aid) realisiert, der eine automatisierte Unterstützung z.B. hier für Schienenfahrzeuge beim Anfahren an Steigungen bereitstellt, durch die ein Zurückrollen verhindert wird. Dabei braucht der Führer des Schienenfahrzeugs die Betriebs- oder Feststellbremsanlage nicht zu bedienen. Durch diese Komfortfunktion wird beim Anfahren die Bremse erst dann gelöst, wenn der Traktionsantrieb genügend Drehmoment bereitstellt, um ein Zurückrollen des Schienenfahrzeugs zu vermeiden.

Gemäß DE 10 2009 005 624 A1 wird eine solche Anfahrhilfe bei einem Schienenfahrzeug dadurch umgesetzt, dass ein Zurückrollen des Schienenfahrzeugs beim Anfahren aus dem Stillstand aus dem Verlauf der gemessenen Drehzahl erfasst und dann mit Hilfe dieser gemessenen Drehzahl die Traktionskraft des Traktionsantriebs gesteuert wird. Nachteilig ist hierbei jedoch zum einen, dass passive Drehzahlsensoren erst ab einer gewissen Drehzahlgrenze eine von Null verschiedene Drehzahl erkennen und andererseits, dass das Schienenfahrzeug beim Abfahren aus dem Stillstand erst ein Stück weit zurückrollen muss, bevor die Steuerung des Traktionsantriebs aktiv werden kann.

Vorzugsweise weist das Schienenfahrzeug einen von der elektronischen Steuereinrichtung gesteuerten elektrischen Traktionsantrieb auf, welcher das Schienenfahrzeug antreibt, sowie eine Eingabeeinrichtung, durch welche ein einen Anfahrwunsch repräsentierendes Anfahrsignal in die elektronische Steuereinrichtung einsteuerbar ist, wobei in der elektronischen Steuereinrichtung eine Anfahrhilfefunktion implementiert ist, durch welche ein Lösen der reibungskraftbasierten Bremseinrichtung und eine Aktivierung des elektrischen Traktionsantriebs bei einem Übergang von einem erfassten Stillstand in einen Fahrzustand gesteuert wird, wenn die elektronische Steuereinrichtung das den Anfahrwunsch repräsentierende Anfahrsignal von der Eingabeeinrichtung empfangen hat.

Folglich muss von der elektronischen Steuereinrichtung einerseits ein Stillstand des Schienenfahrzeugs aktiv erfasst und andererseits durch die elektronische Steuereinrichtung das einen Anfahrwunsch repräsentierende Anfahrsignal von der Eingabeeinrichtung empfangen worden sein, bevor die elektronische Steuereinrichtung im Rahmen der Anfahrhilfefunktion das Lösen der reibungskraftbasierten Bremseinrichtung und die Aktivierung des elektrischen Traktionsantriebs koordiniert.

Vorzugsweise erfasst daher der wenigstens eine Sensor der Sensoreinrichtung wenigstens die die das Schienenfahrzeug in einem erfassten Stillstand haltende Stillstand-Reibungsbremskraft und/oder das das Schienenfahrzeug in einem erfassten Stillstand haltende Stillstand-Reibungsbremsmoment oder eine von der Stillstand-Reibungsbremskraft und/oder von dem Stillstand-Reibungsbremsmoment abgeleitete Größe direkt oder indirekt und die Sensoreinrichtung erzeugt dann das von der erfassten Stillstand-Reibungsbremskraft und/oder von dem erfassten Stillstand-Reibungsbremsmoment oder von der erfassten abgeleiteten Stillstand-Größe abhängige Kraftsignal und steuert dieses in die Steuereinrichtung ein. Weiterhin ist die elektronische Steuereinrichtung bevorzugt ausgebildet ist, dass sie im Rahmen der Anfahrhilfefunktion die reibungskraftbasierte Bremseinrichtung und insbesondere auch den Traktionsantrieb abhängig von dem Kraftsignal steuert, wenn sie das den Anfahrwunsch repräsentierende Anfahrsignal empfangen hat.

Obwohl das Schienenfahrzeug im eingebremsten Zustand steht, können auf das Schienenfahrzeug äußere Kräfte wie z.B. Hangabtriebskräfte wie z.B. aufgrund eines Stands des Schienenfahrzeugs an einem Gefälle oder an einer Steigung bewirken, dass im Stillstand nennenswerte Haftreibungskräfte zwischen den Reibpartnern der reibungsbasierten Bremseinrichtung vorhanden sind, welche hier als Stillstand-Haftreibungskräfte bezeichnet werden.

Bei einer Scheibenbremseinrichtung entspricht die Stillstand-Reibungsbremskraft etwa der Hafttreibungskraft an den Wirkstellen zwischen der Bremsscheibe und den Bremsbelägen. Diese Hafttreibungskraft stellt dann eine Umfangskraft dar, weil sie tangential in Bezug zur kreisförmigen Umfangsrichtung der Bremsscheibe wirkt. Aus dieser Haftreibungskraft kann dann ohne weiteres auch das Stillstand-Reibungsbremsmoment als Produkt aus der Stillstand-Reibungsbremskraft und dem Hebelarm zwischen der Mittelachse der Bremsscheibe und der Wirkstellen ermittelt werden.

Bevorzugt erfasst der wenigstens eine Sensor der Sensoreinrichtung auch eine Anfahr-Reibungsbremskraft und/oder ein Anfahr-Reibungsbremsmoment oder eine von der Anfahr-Reibungsbremskraft und/oder von dem Anfahr-Reibungsbremsmoment abgeleitete Anfahr-Größe direkt oder indirekt, wobei die Erfassung der Anfahr-Reibungsbremskraft und/oder des Anfahr-Reibungsbremsmoments während eines Übergangs vom erfassten Stillstand bis zu einem Fahrzustand erfolgt, in welchem die reibungskraftbasierte Bremseinrichtung gerade in einen vollständig gelösten Zustand überführt worden ist, und die Sensoreinrichtung erzeugt dann das Kraftsignal (auch) abhängig von der erfassten Anfahr-Reibungsbremskraft und/oder von dem erfassten Anfahr-Reibungsbremsmoment oder von der erfassten abgeleiteten Anfahr-Größe und steuert das Kraftsignal in die elektronische Steuereinrichtung ein.

Der vollständig gelösten Zustand der reibungskraftbasierten Bremseinrichtung wird beispielsweise durch die Sensoreinrichtung dadurch festgestellt, dass dann die erfasste Reibungsbremskraft und/oder das erfasste Reibungsbremsmoment annähernd gleich Null ist.

Bei einer Scheibenbremseinrichtung entspricht die Anfahr-Reibungsbremskraft etwa der Gleitreibungskraft an den Wirkstellen zwischen der Bremsscheibe und den Bremsbelägen. Diese Gleitreibungskraft stellt ebenfalls eine Umfangskraft dar, weil sie tangential in Bezug zur kreisförmigen Umfangsrichtung der Bremsscheibe wirkt. Aus dieser Gleitreibungskraft kann dann ohne weiteres auch das Anfahr-Reibungsbremsmoment als Produkt aus der Anfahr-Reibungsbremskraft und dem Hebelarm zwischen der Mittelachse der Bremsscheibe und der Wirkstellen ermittelt werden.

Mit anderen Worten werden im Rahmen der Anfahrhilfefunktion die Koordination zwischen dem Lösen der der reibungskraftbasierten Bremseinrichtung aus ihrem im Stillstand herrschenden zugespannten Zustand einerseits und der Aktivierung des elektrischen Traktionsantriebs und optional auch die Größe der durch den Traktionsantrieb erzeugten Anfahrkraft bzw. des durch den Traktionsantrieb erzeugten Anfahrmoments andererseits bevorzugt auf der Basis des Kraftsignals gesteuert, welches von der Sensoreinrichtung abhängig

a) von der erfassten Stillstand-Reibungsbremskraft und/oder von dem erfassten Stillstand-Reibungsbremsmoment oder von der abgeleiteten Stillstands-Größe, und/oder

b) von der erfassten Anfahr-Reibungsbremskraft und/oder von dem erfassten Anfahr-Reibungsbremsmoment oder von der erfassten abgeleiteten Anfahr-Größe

erzeugt und in die elektronische Steuereinrichtung eingesteuert wird.

Daher soll in diesem Zusammenhang unter dem Begriff "Reibungsbremskraft" bzw. "Reibungsbremsmoment" wenigstens die Stillstands-Reibungsbremskraft und/oder die Anfahr-Reibungsbremskraft bzw. das Stillstands-Reibungsbremsmoment und/oder das Anfahr-Reibungsbremsmoment verstanden werden.

Mit diesen Maßnahmen kann ein Zurückrollen des Schienenfahrzeugs beim Anfahren z.B. an einer Steigung durch eine Ansteuerung des Traktionsantriebs und der Bremseinrichtung abhängig von dem Kraftsignal vermieden werden.

Beim Stand der Technik erfolgt demgegenüber eine Stillstands-, Anfahr- oder Rollüberwachung bzw. eine Anfahrhilfe auf der Basis eines Geschwindigkeitsgebers, welcher zudem ausgebildet sein muss, dass er die Roll- bzw. Fahrtrichtung erkennt.

Weiterhin kann beispielsweise die elektronische Steuereinrichtung ausgebildet sein, dass sie auf der Basis des (insbesondere von der erfassten Stillstand-Reibungsbremskraft und/oder von dem erfassten Stillstand-Reibungsbremsmoment oder von der abgeleiteten Stillstands-Größe abhängigen) Kraftsignals eine auf das Schienenfahrzeug wirkende Hangabtriebskraft berechnet oder schätzt und im Rahmen der Anfahrhilfefunktion in Abhängigkeit der berechneten oder geschätzten Hangabtriebskraft die reibungskraftbasierte Bremseinrichtung und/oder den Traktionsantrieb steuert oder koordiniert.

Die Hangabtriebskraft stellt daher ein Beispiel für eine von der erfassten Stillstand-Reibungsbremskraft und/oder von dem erfassten Stillstand-Reibungsbremsmoment abgeleitete Stillstand-Größe dar.

Da die auf das Schienenfahrzeug wirkende Hangabtriebskraft bevorzugt auf der Basis des Kraftsignals berechnet oder geschätzt wird braucht diese dann nicht mehr anhand eines Neigungssensors ermittelt werden.

Dieser fortbildenden Maßnahme liegt der Gedanke zugrunde, dass die Neigung des Schienenfahrzeugs zum Zurückrollen zum Anfahrruck umso größer ist, je größer die Hangabtriebskraft ist und umso kleiner ist je geringer die Hangabtriebskraft ist und demzufolge eine entsprechend höhere bzw. niedrigere Anfahrkraft durch den Traktionsantrieb bereit gestellt werden muss, um einerseits ein Zurückrollen des Schienenfahrzeugs und andererseits den Anfahrruck zu verhindern. Damit kann jeweils eine in Bezug zu der gerade vorliegenden Hangabtriebskraft stehende Traktionskraft bzw. ein entsprechendes Traktionsmoment durch den Traktionsantrieb gesteuert durch die elektronische Steuereinrichtung zur Verfügung gestellt werden, durch welche(s) ein Zurückrollen und ein Anfahrruck gerade vermieden werden.

Damit ein Zurückrollen eines beispielsweise bergauf anfahrenden Schienenfahrzeugs vermieden wird, muss die folgende Bedingung zu jedem Zeitpunkt erfüllt sein:

$$F_{Motor} + F_{Brems} > F_{Hang}$$

wobei

$F_{Motor}$ die Anfahrtraktionskraft des Traktionsantriebs beim Anfahren,

$F_{Brems}$ die (noch) wirkende Bremskraft beim Anfahren,

$F_{Hang}$ die Hangabtriebskraft an der Steigungsstrecke ist.

Die (das) vom Traktionsantrieb beim Anfahren aus dem Stillstand im Rahmen der Anfahrhilfe aufgebrachte Anfahrtraktionskraft bzw. Anfahrtraktionsmoment wird unter der Prämisse einer ruckfreien und rückrollfreien Anfahrt demzufolge vorzugsweise (auch) abhängig von der auf das Schienenfahrzeug an Steigungen wirkenden Hangabtriebskraft bestimmt, welche wiederum auf der Basis des Kraftsignals von der elektronischen Steuereinrichtung berechnet oder geschätzt wird.

Zusätzlich können noch weitere Parameter, welche im Rahmen einer Anfahrhilfefunktion eine Rolle spielen können abhängig oder auf der Basis des Kraftsignals oder auf der Basis der hieraus berechneten oder geschätzten Hangabtriebskraft bestimmt werden, wie beispielsweise die Zeitdauer, innerhalb welcher die reibungskraftbasierte Bremseinrichtung vom zuspannten Zustand in den vollständigen Lösezustand überführt wird und/oder auch die Zeitdauer, innerhalb welcher der Traktionsantrieb eine erforderliche Traktionskraft oder ein erforderliches Traktionsmoment aufbringen muss. Eine solche Zeitdauer kann auch eine Information über den Zeitpunkt des Beginns und des Endes der jeweiligen Zeitdauer beinhalten.

Diese Fortbildungen der Erfindung können mit einfachen Mitteln realisiert werden, weil hierzu lediglich eine Bestimmung oder Messung der Stillstands- und/oder Anfahr-Reibungsbremskraft und/oder des Stillstands- und/oder Anfahr-Reibungsbremsmoments innerhalb der reibungsbasierten Bremseinrichtung sowie eine Implementierung einer entsprechenden Auswertesoftware in der elektronischen Steuereinrichtung notwendig sind.

Zur Plausibilisierung des Kraftsignals kann wenigstens ein Druckmesssensor vorgesehen sein, welcher beispielsweise im Falle einer pneumatischen Scheibenbremseinrichtung den Bremsdruck misst und in die elektronische Steuereinrichtung einsteuert, woraus diese anhand eines implementierten Algorithmus, in welchen die bekannten geometrischen Dimensionen des oder der pneumatischen oder hydraulischen Bremskrafterzeuger(s) der Scheibenbremseinrichtung die auf die Bremsscheibe wirkende Normalkraft und aus dieser und dem Haftreibungskoeffizienten bzw. dem Gleitreibungskoeffizienten dann die Reibungsbremskraft bestimmt und diesen Wert mit dem auf der Basis des Kraftsignals erhaltenen Wert für die Reibungsbremskraft vergleicht.

Gemäß einer zu bevorzugenden Maßnahme kann die reibungskraftbasierte Bremseinrichtung durch eine aktive reibungskraftbasierte elektro-pneumatische oder elektro-hydraulische Betriebsbremseinrichtung oder durch eine passive reibungskraftbasierte elektropneumatische Federspeicherbremseinrichtung oder durch eine reibungskraftbasierte elektro-mechanische Bremseinrichtung gebildet werden.

Zeichnung

Die Erfindung wird nachstehend anhand eines Ausführungsbeispiels unter Bezugnahme auf die beigefügte Zeichnung näher beschrieben. Es zeigen:

Fig. 1 ein stark schematisiert dargestelltes und an einem Hang eingebremst gehaltenes Schienenfahrzeug gemäß einer bevorzugten Ausführungsform der Erfindung mit beispielsweise drei Drehgestellen;

Fig.2 eine Draufsicht auf eine stark schematisiert dargestellte Scheibenbremseinrichtung gemäß einer bevorzugten Ausführungsform der Erfindung wie sie bei dem Schienenfahrzeug von Fig.1 beispielsweise jeder Achse eines Drehgestells zugeordnet ist;

Fig. 3 eine stark schematisierte Seitenansicht eines Drehgestells, an welchem hier beispielhaft an einer Achse eine Scheibenbremseinrichtung mit einer Sensoreinrichtung gemäß einer bevorzugten Ausführungsform der Erfindung angeordnet ist;

Fig.4     eine stark schematisierte Seitenansicht eines Drehgestells, an welchem an einer Achse eine Scheibenbremseinrichtung mit einer Sensoreinrichtung gemäß dem Stand der Technik angeordnet ist.

Beschreibung des Ausführungsbeispiels

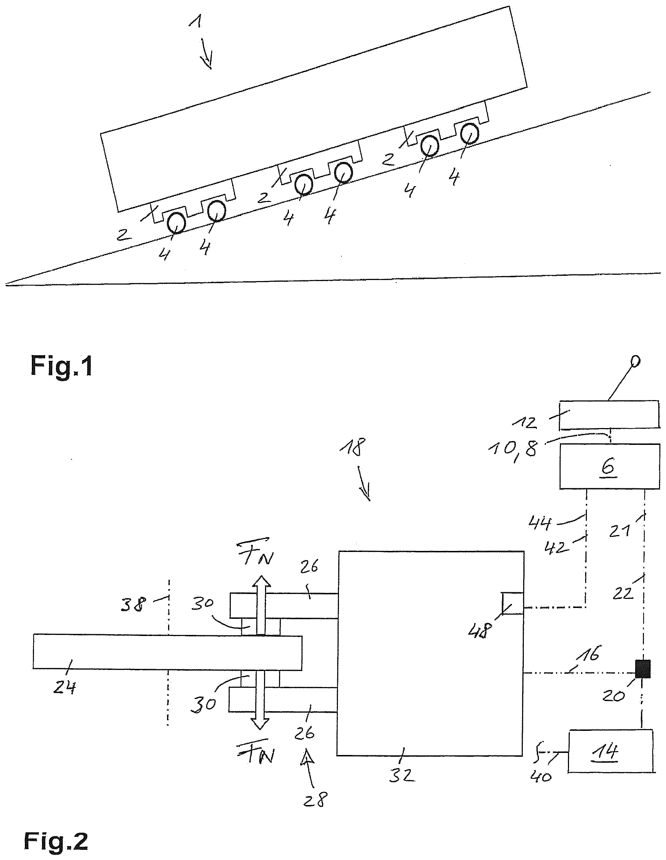

Das in **Fig.1** gezeigte Schienenfahrzeug 1 gemäß einer bevorzugten Ausführungsform der Erfindung weist beispielsweise drei Drehgestelle 2 mit jeweils zwei Achsen 4 auf und ist hier beispielsweise an einer Steigungsstrecke eingebremst gehalten.

Das Schienenfahrzeug 1 weist eine elektronische Steuereinrichtung 6 auf, welche als Einzelgerät oder Baueinheit ausgebildet oder auch funktional auch in mehrere separate Steuereinrichtungen aufgeteilt sein kann.

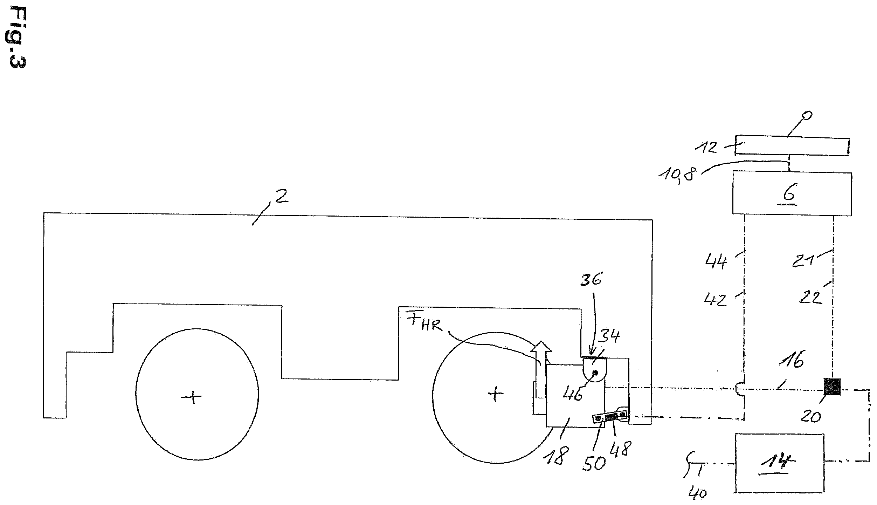

Diese in **Fig.3** aus zeichnerischen Vereinfachungsgründen als Baueinheit dargestellte elektronische Steuereinrichtung 6 steuert neben einer elektropneumatischen Betriebsbremseinrichtung und auch einen elektrischen Traktionsantrieb des Schienenfahrzeugs. Auch eine hier nicht gezeigte elektro-pneumatische Feststellbremseinrichtung wird von der elektronischen Steuereinrichtung 6 bevorzugt gesteuert. Die elektronische Steuereinrichtung 6 empfängt weiterhin ein Anfahrsignal 8 mittels einer ersten Signalleitung 10 von einer in **Fig.3** angedeuteten Eingabeeinrichtung 12, über welche ein Fahrzeugführer den Traktionsantrieb im Hinblick auf die vom Traktionsantrieb aufzuwendende Antriebsleistung steuern kann. Die elektronische Steuereinrichtung 6 steuert dann ein von dem Anfahrsignal 8 und von Sicherheits- und/oder Komfortfunktionen abhängiges Traktionsanforderungssignal in den Traktionsantrieb ein, um das Schienenfahrzeug 1 entsprechend anzutreiben.

Die elektro-pneumatische Betriebsbremseinrichtung und die elektro-pneumatische Feststellbremseinrichtung, welche als Krafterzeuger beispielsweise passive Federspeicherbremszylinder aufweist, sind beispielsweise jeweils mit einer elektro-pneumatischen, von der elektronischen Steuereinrichtung gesteuerten Ventileinrichtung 14 ausgestattet **(Fig.3)**. Von der elektropneumatischen Ventileinrichtung 14 der elektro-pneumatischen Betriebsbremseinrichtung ist eine pneumatische Leitung 16 zu pneumatischen Scheibenbremseinrichtungen 18 gezogen. In dieser pneumatischen Leitung 16 ist bevorzugt ein Bremsdrucksensor 20 angeordnet, welcher den in die Scheibenbremseinrichtung 18 eingesteuerten pneumatischen Bremsdruck misst und ein entsprechendes Bremsdrucksignal 21 über eine zweite Signalleitung 22 in die elektronische Steuereinrichtung 6 rückkoppelt, um beispielsweise innerhalb einer in die elektronische Steuereinrichtung 6 implementierte Bremsdruckregelung einen durch den Bremsdrucksensor gemessenen Ist-Bremsdruck an einen Soll-Bremsdruck anzupassen, welcher einem Bremsanforderungssignal entspricht.

In dieser elektronischen Steuereinrichtung 6 ist eine Anfahrhilfefunktion implementiert, die eine automatisierte Unterstützung beim Anfahren des Schienenfahrzeugs 1 insbesondere an Steigungen wie in **Fig.1** bereitstellt, durch die ein Zurückrollen bzw. ein Anfahrruck verhindert wird. Dabei braucht der Führer des Schienenfahrzeugs 1 die Betriebs- oder Feststellbremsanlage nicht zu bedienen. Durch diese Komfortfunktion wird beim Anfahren z.B. die Betriebsbremseinrichtung erst dann gelöst, wenn der Traktionsantrieb genügend Drehmoment bereitstellt, um ein Zurückrollen des Schienenfahrzeugs 1 zu vermeiden. Folglich wird mit Hilfe dieser Anfahrhilfefunktion beim Anfahren des Schienenfahrzeugs 1 in der in **Fig.1** gezeigten Situation (Anfahren entgegen der Hangabtriebskraft) die Steuerung der elektro-pneumatischen Bremseinrichtung und des elektrischen Traktionsantriebs koordiniert.

**Fig.2** zeigt eine schematische Draufsicht eine auf eine pneumatische Scheibenbremseinrichtung 18 wie sie hier beispielsweise an jeder Achse der Drehgestelle des Schienenfahrzeugs vorhanden ist. Neben der bereits oben beschriebenen elektronischen Steuereinrichtung 6, welche über die elektro-pneumatische Ventileinrichtung 14 die einzelnen pneumatischen Scheibenbremseinrichtungen 18 an den Achsen 4 steuert, ist jeweils eine Bremsscheibe 24 vorhanden, hier beispielsweise zwei an Zangenhebeln 26 einer Bremszange 28 befestigte und mit der Bremsscheibe 24 im Bremszuspannfall reibend zusammenwirkende Bremsbeläge 30. Die Bremsbeläge 30 sind jeweils an einem Ende eines Zangenhebels 26 der Bremszange 28 befestigt. Die Bremszange 28 ist mit einem Bremsgehäuse 32 an einer oder mehreren Lagerstellen an einer Konsole 34 befestigt, welche wiederum an dem Drehgestell 2 durch Lagerstellen 36 gelagert ist. Eine beispielhafte Ausführungsform einer solchen Konsole 34 ist in **Fig.3** dargestellt.

In **Fig.2** nicht direkt sichtbar ist in dem Bremsgehäuse 32 der pneumatischen Scheibenbremseinrichtung 18 ein pneumatischer Bremszylinder als Krafterzeuger angeordnet, welcher auf die Zangenhebel 26 der Bremszange 28 treibend wirkt. Während der Fahrt eines Schienenfahrzeugs 1 rotiert die Bremsscheibe 24 um eine Drehachse 38. Die Bremsbeläge 30 sind seitlich zur Bremsscheibe 24 und insbesondere in einem Toleranzbereich parallel zu den Seitenflächen der Bremsscheibe 24 angeordnet. Die Wirkflächen der Bremsbeläge 30 überdecken jeweils einen Teilbereich einer Seitenfläche der Bremsscheibe 24. Die Bremszange 28 weist in dem Ausführungsbeispiel eine U-Form auf.

Durch ein von der elektronischen Steuereinrichtung 6 über eine elektrische Steuerleitung 40 in die elektro-pneumatische Ventileinrichtung eingegebenes Zuspannsignal erzeugt diese elektro-pneumatische Ventileinrichtung 14 einen pneumatischen Bremsdruck, mit welchem der pneumatische Bremszylinder der Scheibenbremseinrichtung 18 belüftet wird, wobei dann die Zangenhebel 28 die beiden Bremsbeläge 30 in Reibungskontakt mit der Bremsscheibe 24 bringen und hier durch Pfeile symbolisierte Normalkräfte $F_N$ eine Reibungskraft zwischen den Bremsbelägen 30 und der Bremsscheibe 24 erzeugt wird, welche parallel zu den Seitenflächen der Bremsscheibe 24 ausgerichtet sind.

Im Falle des an dem Hang mittels der Scheibenbremseinrichtungen 18 eingebremst gehaltenen Schienenfahrzeugs 1 wird von jeder der Scheibenbremseinrichtungen 18 jeweils eine Reibungsbremskraft $F_{HR}$ erzeugt, welche in **Fig.3** ebenfalls als Pfeil dargestellt sind, bzw. ein entsprechendes Reibungsbremsmoment $M_{HR}$ erzeugt. Diese Reibungsbremskraft $F_{HR}$ entspricht im Stillstand jeweils der Haftreibungskraft, welche sich anhand des jeweiligen Haftreibungskoeffizienten zwischen den Reibungspartnern Bremsscheibe-Bremsbeläge 24, 30 ergibt. Daher entspricht die gesamte Reibungsbremskraft $F_{HR}$, d.h. die Gesamt-Reibungsbremskraft, welche im Stillstand auf das Schienenfahrzeug 1 wirkt, der Summe der Reibungsbremskräfte $F_{HR}$ an den Wirkstellen jeweils zwischen der Bremsscheibe 24 und den Bremsbelägen 30. Diese Reibungsbremskraft $F_{HR}$ stellt dann eine Umfangskraft dar, weil sie tangential in Bezug zur kreisförmigen Umfangsrichtung der Bremsscheibe 24 wirkt, wie anhand der die Reibungsbremskraft $F_{HR}$ repräsentierenden Pfeile in **Fig.3** leicht vorstellbar ist.

Das Schienenfahrzeug 1 befindet sich daher in der Situation von **Fig.1** in einem durch die Scheibenbremseinrichtungen 18 eingebremsten Zustand und im Stillstand, welcher durch geeignete Sensoren z.B. von Drehzahlsensoren erfasst wird.

Weiterhin ist eine Sensoreinrichtung vorgesehen, welche die das Schienenfahrzeug im erfassten Stillstand haltenden Reibungsbremskräfte $F_{HR}$ der Scheibenbremseinrichtungen 18 hier beispielsweise indirekt erfasst.

Die Sensoreinrichtung ist auch ausgebildet, dass sie eine Anfahr-Reibungsbremskraft $F_{HR}$ und/oder ein Anfahr-Reibungsbremsmoment $M_{HR}$ oder eine von der Anfahr-Reibungsbremskraft und/oder von dem Anfahr-Reibungsbremsmoment abgeleitete Anfahr-Größe direkt oder indirekt erfasst, wobei die Erfassung der Anfahr-Reibungsbremskraft $F_{HR}$ und/oder des Anfahr-Reibungsbremsmoments $M_{HR}$ während eines Übergangs vom erfassten Stillstand bis zu einem Fahrzustand erfolgt, in welchem die reibungskraftbasierte Bremseinrichtung gerade in einen vollständig gelösten Zustand überführt worden ist.

Der vollständig gelöste Zustand der reibungskraftbasierten Scheibenbremseinrichtung wird beispielsweise durch die Sensoreinrichtung dadurch festgestellt, dass dann die erfasste Reibungsbremskraft $F_{HR}$ und/oder das erfasste Reibungsbremsmoment $M_{HR}$ annähernd gleich Null ist.

Die Sensoreinrichtung ist dann ausgebildet, dass sie jeweils ein von der jeweils hier beispielsweise indirekt erfassten Reibungsbremskraft $F_{HR}$ abhängiges oder diese repräsentierendes Kraftsignal 42 über eine dritte Signalleitung 44 in die elektronische Steuereinrichtung 6 einsteuert. Alternativ oder zusätzlich ist auch eine Erzeugung des Kraftsignals 42 auf der Basis des direkt oder indirekt erfassten Reibungsbremsmoments $M_{HR}$ möglich.

Dabei stellen die direkt oder indirekt erfasste Reibungsbremskraft $F_{HR}$ eine Haftreibungsbremskraft (Stillstand) oder eine Gleitreibungsbremskraft (Anfahren) und das direkt oder indirekt erfasste Reibungsbremsmoment $M_{HR}$ ein Haftreibungsbremsmoment (Stillstand) oder ein Gleitreibungsbremsmoment (Anfahren) dar.

Bei der Ausführungsform von **Fig.3** ist beispielsweise das Bremsengehäuse 32 der Scheibenbremseinrichtung 18 einerseits an der am Drehgestell 2 gelagerten Konsole 34 durch eine Gelenklagerung 46 gelenkig und andererseits am Drehgestell 2 durch eine einen Kraftmesssensor 48 der Sensoreinrichtung tragende Stütze 50 gelagert. Die Stütze 50 ist dabei beispielsweise mit ihrem einen Ende am Bremsgehäuse 32 und mit ihrem anderen Ende am Drehgestell 2 gelenkig gelagert. Dabei ist zwischen der Längsachse der Stütze 50 und der Gelenklagerung 46 ein Hebelarm vorhanden. In **Fig.2** ist der Kraftmesssensor 48 lediglich aus zeichnerischen Vereinfachungsgründen im Bereich des Bremsgehäuses 32 dargestellt, während er in Wirklichkeit wie in **Fig.3** gezeigt auf, an oder in der Stütze 50 angeordnet ist.

Im Stillstand des Schienenfahrzeugs wird das Bremsgehäuse 32 infolge der durch den Haftreibungskontakt der Bremsbeläge 30 mit der Bremsscheibe 24 entstehenden Reibungsbremskraft $F_{HR}$ um die Gelenklagerung 46 geschwenkt und aufgrund des Hebelarms zwischen Stütze 50 und Gelenklagerung 46 eine Reaktionskraft z.B. hier als Zugkraft in der Stütze 50 erzeugt, welche der beispielsweise an der Stütze 50 angeordnete Kraftmesssensor 48 der Sensoreinrichtung misst und an die elektronische Steuereinrichtung 6 über die dritte 44 Signalleitung meldet. In der elektronischen Steuereinrichtung 6 wird dann die von der Scheibenbremseinrichtung 18 erzeugte Reibungsbremskraft $F_{HR}$ anhand des Kraftsignals 42 des Kraftmesssensors 48 und des Hebelarms zwischen der Gelenklagerung 46 und der Stütze 50 bestimmt.

Die Stütze 50 kann durch einen hohlen Körper oder durch einen Körper aus Vollmaterial gebildet werden. Das Material und die Geometrie der Stütze bestimmt der Fachmann bestenfalls abhängig von der Belastung durch die Reaktionskraft. Anzustreben ist eine reine Zug- oder Druckbelastung durch die Reaktionskraft, so dass dann die Stütze 50 mechanisch wie ein Zug-/Druckstab wirkt.

Alternativ oder zusätzlich kann in der elektronischen Steuereinrichtung 6 die von der Scheibenbremseinrichtung 18 erzeugte Reibungsbremskraft $F_{HR}$ anhand des Signals des Bremsdrucksensors 20 bestimmt werden, beispielsweise durch einen implementierten Algorithmus, durch welchen auf der Basis von gespeicherten geometrischen Dimensionen des pneumatischen Bremszylinders der Scheibenbremseinrichtung 18 die auf die Bremsscheibe 24 wirkende Normalkraft $F_N$ und aus dieser und dem Haftreibungskoeffizienten bzw. dem Gleitreibungskoeffizienten dann die Reibungsbremskraft $F_{HR}$ bestimmt wird.

Dabei können das Signal des Bremsdrucksensors 20 und das Signal des Kraftmesssensors 48 zur gegenseitigen Plausibilisierung und Überwachung innerhalb der elektronischen Steuereinrichtung 6 verwendet werden. In beiden Fällen handelt es sich um eine indirekte Erfassung der Reibungsbremskraft $F_{HR}$, weil diese hier eben nicht direkt an den Wirkstellen zwischen den Bremsbelägen 30 und der Bremsscheibe 24 gemessen wird. Alternativ ist natürlich auch denkbar, die Reibungsbremskraft $F_{HR}$ direkt an diesen Wirkstellen zu bestimmen.

Die Anfahrhilfefunktion koordiniert dann beim Anfahren des Schienenfahrzeugs 1 aus der in **Fig.1** gezeigten Situation auf ein über die Eingabeeinrichtung 12 eingegebenes, einen Wunsch zum Anfahren repräsentierendes Anfahrsignal 8 hin das Lösen der Scheibenbremseinrichtungen 18 des Schienenfahrzeugs und die Aktivierung d.h. das in Gangsetzen des elektrischen Traktionsantriebs sowie optional auch die Größe der durch den Traktionsantrieb erzeugten Anfahrkraft bzw. des durch den Traktionsantrieb erzeugten Anfahrmoments auf der Basis des Kraftsignals 42, welches die Reibungsbremskraft $F_{HR}$ repräsentiert.

Mit anderen Worten werden im Rahmen der Anfahrhilfefunktion die Koordination zwischen dem Lösen der der reibungskraftbasierten Scheibenbremseinrichtungen 18 und die Aktivierung des elektrischen Traktionsantriebs und insbesondere die Größe der durch den Traktionsantrieb erzeugten Anfahrkraft bzw. des durch den Traktionsantrieb erzeugten Anfahrmoments auf der Basis des von der hier beispielsweise indirekt erfassten Reibungsbremskraft $F_{HR}$ abhängigen Kraftsignals 42 gesteuert.

Die elektronische Steuereinrichtung 6 kann auch ausgebildet sein, dass sie auf der Basis des von der erfassten Reibungsbremskraft $F_{HR}$ abhängigen Kraftsignals 42 eine auf das Schienenfahrzeug 1 wirkende Hangabtriebskraft berechnet oder schätzt und im Rahmen der Anfahrhilfefunktion in Abhängigkeit der berechneten oder geschätzten Hangabtriebskraft die reibungskraftbasierten Scheibenbremseinrichtungen 18 und insbesondere den Traktionsantrieb steuert oder koordiniert.

Dieser fortbildenden Maßnahme liegt der Gedanke zugrunde, dass die Neigung des Schienenfahrzeugs 1 zum Zurückrollen zum Anfahrruck umso größer ist, je größer die Hangabtriebskraft ist und umso kleiner ist je geringer die Hangabtriebskraft ist und demzufolge eine entsprechend höhere bzw. niedrigere Anfahrkraft durch den Traktionsantrieb bereit gestellt werden muss, um einerseits ein Zurückrollen des Schienenfahrzeugs 1 und andererseits den Anfahrruck zu verhindern. Damit kann jeweils eine in Bezug zu der gerade vorliegenden Hangabtriebskraft stehende Traktionskraft bzw. ein entsprechendes Traktionsmoment durch den Traktionsantrieb gesteuert durch die elektronische Steuereinrichtung 6 zur Verfügung gestellt werden, durch welche(s) ein Zurückrollen und ein Anfahrruck gerade vermieden werden.

Zusätzlich können noch weitere Parameter, welche im Rahmen einer Anfahrhilfefunktion eine Rolle spielen können abhängig oder auf der Basis des von der erfassten Reibungsbremskraft $F_{HR}$ abhängigen Kraftsignals oder auf der Basis der hieraus berechneten oder geschätzten Hangabtriebskraft bestimmt werden, wie beispielsweise die Zeitdauer, innerhalb welcher die reibungskraftbasierten Scheibenbremseinrichtungen 18 vom Zuspannzustand in den vollständigen Lösezustand überführt wird und/oder auch die Zeitdauer, innerhalb welcher der Traktionsantrieb eine erforderliche Traktionskraft oder ein erforderliches Traktionsmoment aufbringen muss. Eine solche Zeitdauer kann auch eine Information über den Zeitpunkt des Beginns und des Endes der jeweiligen Zeitdauer beinhalten.

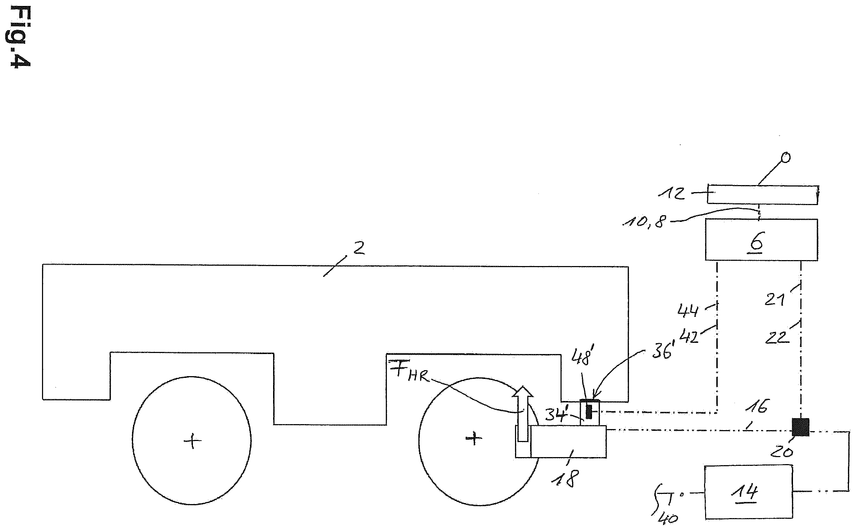

Bei der Ausführung von **Fig.4,** welche eine Sensoreinrichtung bzw. Kraftmesssensoren 48' des Stands der Technik zeigt, ist das Bremsgehäuse 32 der pneumatischen Scheibenbremseinrichtung 18 mittels einer Konsole 34' an dem Drehgestell 2 gehalten, wobei beispielsweise zwei voneinander parallel zur Bremsscheibenebene gesehen mit Abstand zueinander angeordneten Lagerstellen 36' der Konsole 34 an dem Drehgestell 2 beispielsweise je ein Kraftmesssensor 48' zur Erfassung von auf die Lagerstellen 36' wirkenden Kräften angeordnet ist. Aus Maßstabsgründen sind in **Fig.4** die Lagerstellen 36' und die Kraftmesssensoren 48' jeweils als eine Einheit dargestellt. Diese Kraftmesssensoren 48' sind dann von der Sensoreinrichtung umfasst.

Dies kann beispielsweise dadurch realisiert sein, dass die zwei Lagerstellen Messbolzen als Kraftmesssensoren 48' aufweisen, die je ausgebildet sind, die an der jeweiligen Lagerstelle 36' auftretenden Lagerkräfte zu messen und entsprechend zwei Kraftsignale 42 über die dritte Signalleitung 44 an die elektronische Steuereinrichtung 6 auszugeben.

Weil dann in der Ebene parallel zur Bremsscheibenebene gesehen ein Hebelarm zwischen den beiden Lagerstellen 36 vorhanden ist, wird durch einen in der elektronischen Steuereinrichtung 6 implementierten Algorithmus aus den beiden Kraftsignalen 42 sowie dem Wert für den Hebelarm das Reibungsbremsmoment $M_{HR}$ bzw. die Reibungsbremskraft $F_{HR}$ berechnet.

BEZUGSZEICHENLISTE

| | |
|---|---|
| 1 | Schienenfahrzeug |
| 2 | Drehgestell |
| 4 | Achse |
| 6 | Steuereinrichtung |
| 8 | Anfahrsignal |
| 10 | erste Signalleitung |
| 12 | Eingabeeinrichtung |
| 14 | Ventileinrichtung |
| 16 | pneumatische Leitung |
| 18 | Scheibenbremseinrichtung |
| 20 | Bremsdrucksensor |
| 21 | Bremsdrucksignal |
| 22 | zweite Signalleitung |
| 24 | Bremsscheibe |
| 26 | Zangenhebel |
| 28 | Bremszange |
| 30 | Bremsbeläge |
| 32 | Bremsgehäuse |
| 34,34' | Konsole |
| 36,36' | Lagerstellen |
| 38 | Drehachse |
| 40 | Steuerleitung |
| 42 | Kraftsignal |
| 44 | dritte Signalleitung |
| 46 | Gelenklagerung |
| 48,48' | Kraftmesssensor |
| 50 | Stütze |
| $F_{HR}$ | Reibungsbremskraft |
| $M_{HR}$ | Reibungsbremsmoment |
| $F_N$ | Normalkraft |

**Patentansprüche**

1. Schienenfahrzeug (1) mit

a) einer von einer elektronischen Steuereinrichtung (6) gesteuerten reibungskraftbasierten Bremseinrichtung (18), welche wenigstens eine einem Rad oder einem Radsatz (4) zugeordnete und über eine Konsole (34) an einem Fahrwerk (2) festgelegte Scheibenbremseinrichtung (18) aufweist, welche wenigstens einen mit einer Bremsscheibe (24) zum Bremszuspannen in Reibkontakt und zum Bremslösen außer Reibkontakt tretenden Bremsbelag (30), eine mit dem wenigstens einen Bremsbelag (30) verbundene Bremszange (28) sowie ein Bremsgehäuse (32) umfasst, an welchem die Bremszange (28) gelagert ist, wobei beim Reibkontakt des wenigstens einen Bremsbelags (30) mit der Bremsscheibe (24) eine Reibungsbremskraft ($F_{HR}$) und/oder ein Reibungsbremsmoment ($M_{HR}$) erzeugt wird,
b) eine wenigstens einen Sensor umfassende Sensoreinrichtung (48), welche die Reibungsbremskraft ($F_{HR}$) und/oder das Reibungsbremsmoment ($M_{HR}$) oder eine von der Reibungsbremskraft ($F_{HR}$) und/oder von dem Reibungsbremsmoment ($M_{HR}$) abgeleitete Größe direkt oder indirekt erfasst und ein von der erfassten Reibungsbremskraft ($F_{HR}$) und/oder von dem erfassten Reibungsbremsmoment ($M_{HR}$) oder von der erfassten abgeleiteten Größe abhängiges elektrisches Kraftsignal (42) erzeugt und in die elektronische Steuereinrichtung (6) einsteuert, **dadurch gekennzeichnet, dass**
c) das Bremsgehäuse (32) an der Konsole (34) einerseits durch eine Gelenklagerung (46) gelenkig und andererseits durch eine den wenigstens einen Sensor der Sensoreinrichtung (48) tragende Stütze (50) derart gelagert ist, dass infolge der durch den Reibungskontakt des wenigstens einen Bremsbelags (30) mit der Bremsscheibe (24) entstehenden Reibungsbremskraft ($F_{HR}$) ein Drehmoment auf das Bremsgehäuse (32) um die Gelenklagerung (46) sowie eine hieraus resultierende Reaktionskraft in der Stütze (50) erzeugt werden, welche der wenigstens eine Sensor der Sensoreinrichtung (48) direkt oder indirekt misst und die Sensoreinrichtung (48) basierend auf der Reaktionskraft das Kraftsignal (42) erzeugt.

2. Schienenfahrzeug nach Anspruch 1, **dadurch gekennzeichnet, dass** die Stütze (50) mit ihrem einen Ende am Bremsgehäuse (32) und mit ihrem anderen Ende am Fahrwerk (2) derart gelenkig gelagert ist, dass zwischen einer Längsachse der Stütze (50) und der Gelenklagerung (46) des Bremsgehäuses (32) ein Hebelarm ausgebildet wird.

3. Schienenfahrzeug nach Anspruch 1 oder 2, **dadurch gekennzeichnet, dass** elektronische Steuereinrichtung (6) ausgebildet ist, dass sie die Reibungsbremskraft ($F_{HR}$) und/oder das Reibungsbremsmoment ($M_{HR}$) oder die hiervon abgeleitete Größe abhängig von einem zwischen der Gelenklagerung (46) und der Stütze (50) wirkenden Hebelarm bestimmt.

4. Schienenfahrzeug nach einem der vorhergehenden Ansprüche, **dadurch gekennzeichnet, dass** der wenigstens eine Sensor der Sensoreinrichtung (48) auf, an oder innerhalb der Stütze angeordnet ist.

5. Schienenfahrzeug nach einem der vorhergehenden Ansprüche, **dadurch gekennzeichnet, dass** der wenigstens eine Sensor der Sensoreinrichtung durch einen Kraftmesssensor (48) wie einen Dehnmessstreifen oder einen auf der Basis der Dünnfilmtechnik (DFT) arbeitenden Sensor gebildet wird.

6. Schienenfahrzeug nach einem der vorhergehenden Ansprüche, **dadurch gekennzeichnet, dass** der wenigstens eine Sensor der Sensoreinrichtung (48) wenigstens beim Bremsen und/oder im Stillstand und/oder beim Anfahren und/oder in Fahrt des Schienenfahrzeugs (1) die Reibungsbremskraft ($F_{HR}$) und/oder das Reibungsbremsmoment ($M_{HR}$) direkt oder indirekt misst und abhängig davon die Sensoreinrichtung (48) das Kraftsignal (42) erzeugt.

7. Schienenfahrzeug nach einem der vorhergehenden Ansprüche, **dadurch gekennzeichnet, dass** der wenigstens eine Sensor der Sensoreinrichtung (48) wenigstens die das Schienenfahrzeug (1) in einem erfassten Stillstand haltende Stillstands-Reibungsbremskraft ($F_{HR}$) und/oder das das Schienenfahrzeug (1) in einem erfassten Stillstand haltende Stillstands-Reibungsbremsmoment ($M_{HR}$) oder eine von der Stillstands-Reibungsbremskraft ($F_{HR}$) und/oder von dem Stillstands-Reibungsbremsmoment ($M_{HR}$) abgeleitete Stillstands-Größe direkt oder indirekt erfasst und die Sensoreinrichtung (48) das von der erfassten Stillstands-Reibungsbremskraft ($F_{HR}$) und/oder von dem erfassten Stillstands-Reibungsbremsmoment ($M_{HR}$) oder von der erfassten abgeleiteten Stillstands-Größe abhängige Kraftsignal (42) erzeugt und in die elektronische Steuereinrichtung (6) einsteuert.

8. Schienenfahrzeug nach einem der vorhergehenden Ansprüche, **dadurch gekennzeichnet, dass** der wenigstens eine Sensor der Sensoreinrichtung (48) eine Anfahr-Reibungsbremskraft ($F_{HR}$) und/oder ein Anfahr-Reibungsbremsmoment ($M_{HR}$) oder eine von der Anfahr-Reibungsbremskraft ($F_{HR}$) und/oder von dem Anfahr-Reibungsbremsmoment ($M_{HR}$) abgeleitete Anfahr-Größe direkt oder indirekt erfasst, wobei die Erfassung der Anfahr-Reibungsbremskraft ($F_{HR}$) und/oder des Anfahr-Reibungsbremsmoments ($M_{HR}$) während eines Übergangs vom erfassten Stillstand bis zu einem Fahrzustand erfolgt, in welchem die reibungskraftbasierte Bremseinrichtung (18) von einem im Stillstand herrschenden zugespannten Zustand in einen vollständig gelösten Zustand überführt worden ist, und dass die Sensoreinrichtung (48) das Kraftsignal (42) abhängig von der erfassten Anfahr-Reibungsbremskraft ($F_{HR}$) und/oder von dem erfassten Anfahr-Reibungsbremsmoment ($M_{HR}$) oder von der erfassten abgeleiteten Anfahr-Größe erzeugt und in die elektronische Steuereinrichtung (6) einsteuert.

9. Schienenfahrzeug nach Anspruch 8, **dadurch gekennzeichnet, dass** der vollständig gelöste Zustand der reibungskraftbasierten Bremseinrichtung durch die Sensoreinrichtung (48) dadurch festgestellt wird, dass dann die erfasste Reibungsbremskraft ($F_{HR}$) und/oder das erfasste Reibungsbremsmoment ($M_{HR}$) annähernd gleich Null sind.

10. Schienenfahrzeug nach einem der vorhergehenden Ansprüche, **dadurch gekennzeichnet, dass** wenigstens Folgendes vorgesehen ist:

    a) ein von der elektronischen Steuereinrichtung (6) gesteuerter elektrischer Traktionsantrieb, welcher das Schienenfahrzeug antreibt,
    b) eine Eingabeeinrichtung (12), durch welche ein einen Anfahrwunsch repräsentierendes Anfahrsignal (8) in die elektronische Steuereinrichtung (6) einsteuerbar ist, wobei
    c) in der elektronischen Steuereinrichtung (6) eine Anfahrhilfefunktion implementiert ist, durch welche ein Lösen der reibungskraftbasierten Bremseinrichtung (18) und eine Aktivierung des elektrischen Traktionsantriebs bei einem Übergang von einem erfassten Stillstand in einen Fahrzustand gesteuert wird, wenn die elektronische Steuereinrichtung (6) das den Anfahrwunsch repräsentierende Anfahrsignal (8) von der Eingabeeinrichtung (12) empfangen hat, und wobei
    d) die elektronische Steuereinrichtung (6) ausgebildet ist, dass sie im Rahmen der Anfahrhilfefunktion die reibungskraftbasierte Bremseinrichtung (18) und insbesondere auch den Traktionsantrieb abhängig von dem Kraftsignal (42) steuert, wenn sie das den Anfahrwunsch repräsentierende Anfahrsignal (8) empfangen hat.

11. Schienenfahrzeug nach Anspruch 10, **dadurch gekennzeichnet, dass** die elektronische Steuereinrichtung (6) ausgebildet ist, dass sie auf der Basis des Kraftsignals (42) eine auf das Schienenfahrzeug (1) wirkende Hangabtriebskraft berechnet oder schätzt und im Rahmen der Anfahrhilfefunktion in Abhängigkeit der berechneten oder geschätzten Hangabtriebskraft die reibungskraftbasierte Bremseinrichtung (18) und/oder den Traktionsantrieb steuert.

12. Schienenfahrzeug nach einem der vorhergehenden Ansprüche, **dadurch gekennzeichnet, dass** die reibungskraftbasierte Bremseinrichtung durch eine aktive reibungskraftbasierte elektro-pneumatische oder elektro-hydraulische Betriebsbremseinrichtung oder durch eine passive reibungskraftbasierte elektro-pneumatische Federspeicherbremseinrichtung oder durch eine reibungskraftbasierte elektro-mechanische Bremseinrichtung gebildet wird.

## Claims

1. A rail vehicle (1) having

    a) a friction-force-based brake device (18) that is controlled by an electronic control device (6) and has at least one disc brake device (18) that is associated with a wheel or a wheel set (4), fixed by a bracket (34) to a bogie (2) and comprises at least one brake pad (30) that comes into and out of frictional contact with a brake disc (24) in order to apply and release the brake, a brake calliper (28) connected to the at least one brake pad (30) and a brake housing (32) on which the brake calliper (30) is mounted, a frictional brake force ($F_{HR}$) and/or a frictional brake torque ($M_{HR}$) being generated when the at least one brake pad (20) comes into frictional contact with the brake disc (24),

b) a sensor device (48) that comprises at least one sensor, directly or indirectly measures the frictional brake force ($F_{HR}$) and/or the frictional brake torque ($M_{HR}$) or a value derived from the frictional brake force ($F_{HR}$) and/or the frictional brake torque ($M_{HR}$), generates an electrical force signal (42) dependent on the frictional brake force ($F_{HR}$) measured and/or the frictional brake torque ($M_{HR}$) measured or on the derived value measured and sends it to the electronic control device (6), **characterised in that**

c) the brake housing (32) is mounted on the bracket (34) in an articulated manner by means of a slide bearing (46) on one side and by a strut (50) bearing the at last one sensor of the sensor device (48) on the other such that as a result of the frictional brake force ($F_{HR}$) arising from the frictional contact between the at least one brake pad (30) and the brake disc (24) a torque is generated on the brake housing (32) about the slide bearing (46), a resulting reaction force is generated in the strut (50) and measured directly or indirectly by a sensor of the sensor device (48) and the sensor device (48) generates the force signal (42) based on the reaction force.

2. A rail vehicle according to claim 1, **characterised in that** one end of the strut (50) is mounted in an articulated manner on the brake housing and the other end is mounted in an articulated manner on the bogie (2) so as to form a lever arm between a longitudinal axis of the strut (50) and the slide bearing (46) of the brake housing (32).

3. A rail vehicle according to claim 1 or 2, **characterised in that** the electronic control device (6) is designed so as to determine the frictional brake force ($F_{HR}$) and/or the frictional brake torque ($M_{HR}$) or the value derived from them dependent on a lever arm acting between the slide bearing (46) and the strut (50).

4. A rail vehicle according to any one of the preceding claims, **characterised in that** the at least one sensor of the sensor device (48) is arranged at, on or inside the strut.

5. A rail vehicle according to any one of the preceding claims, **characterised in that** the at least one sensor of the sensor device (48) takes the form of a force-measuring sensor (48) such as a strain gauge or a sensor operating on the basis of thin film technology (TFT).

6. A rail vehicle according to any one of the preceding claims, **characterised in that** the at least one sensor of the sensor device (48) directly or indirectly measures the frictional brake force ($F_{HR}$) and/or the frictional brake torque ($M_{HR}$) at least when the rail vehicle (1) brakes and/or is at a standstill and/or starts up and or is travelling and that the sensor device (48) generates the force signal (42) dependent on these forces.

7. A rail vehicle according to any one of the preceding claims, **characterised in that** the at least one sensor of the sensor device (48) directly or indirectly measures at least the standstill frictional brake force ($F_{HR}$) holding the vehicle (1) at a measured standstill and/or the standstill frictional brake torque ($M_{HR}$) holding the rail vehicle (1) at a measured standstill or a standstill value derived from the standstill frictional brake force ($F_{HR}$) and/or the standstill frictional brake torque ($M_{HR}$) and that the sensor device (48) generates the force signal (42) dependent on the standstill frictional brake force ($F_{HR}$) measured and/or the standstill frictional brake torque ($M_{HR}$) measured or on the derived standstill value measured and sends it to the electronic control device (6).

8. A rail vehicle according to any one of the preceding claims, **characterised in that** the at least one sensor of the sensor device (48) directly or indirectly measures a start-up frictional brake force ($F_{HR}$) and/or a start-up frictional brake torque ($M_{HR}$) or a start-up value derived from the start-up frictional brake force ($F_{HR}$) and/or the start-up frictional brake torque ($M_{HR}$), the start-up frictional brake force ($F_{HR}$) and/or the start-up frictional brake torque ($M_{HR}$) being measured during a transition from the measured standstill to a travelling state in which the friction-force-based brake device (18) has been switched from an applied state prevailing at a standstill to a fully released state, and that the sensor device (48) generates the force signal (42) dependent on the start-up frictional brake force ($F_{HR}$) measured and/or the start-up frictional brake torque ($M_{HR}$) measured or on the derived start-up value measured and sends it to the electronic control device (6).

9. A rail vehicle according to claim 8, **characterised in that** the sensor device (48) determines that the friction-force-based brake device (18) is in the fully released state by ascertaining that the frictional brake force ($F_{HR}$) measured and/or the frictional brake torque ($M_{HR}$) measured are approximately equal to zero.

10. A rail vehicle according to any one of the preceding claims, **characterised in that** at least the following are provided:

a) an electric traction drive that is controlled by the electronic control device (6) and drives the rail vehicle,

b) an input device (12) by means of which a start-up signal representing a start-up request can be sent to the electronic control device (6),

c) there being implemented in the electronic control device (6) an auxiliary start-up function by means of which the releasing of the friction-force-based brake device (18) and the activation of the electric traction drive are controlled during a transition from a measured standstill to a travelling state if the electronic control device (8) has received the start-up signal (8) representing the start-up request from the input device (12), and

d) the electronic control device (12) being designed so as to control the friction-force-based brake device (18) and in particular the traction drive dependent on the force signal (42) as part of the auxiliary start-up function once it has received the start-up signal (8) representing-up the start request.

11. A rail vehicle according to claim 1, **characterised in that** the electronic control device (6) is designed so as to calculate or estimate a gradient resistance acting on the rail vehicle (1) based on the force signal (42) and to control the friction-force-based brake device (18) and/or the traction drive dependent on the gradient resistance calculated or estimated as part of the auxiliary start-up function.

12. A rail vehicle according to any one of the preceding claims, **characterised in that** the friction-force-based brake device (18) takes the form of an active friction-force-based electropneumatic or electrohydraulic service brake device or of a passive friction-force-based electropneumatic spring accumulator brake device or of a friction-force-based electromechanical brake device.

**Revendications**

1. Véhicule (1) ferroviaire comprenant

a) un dispositif (18) de freinage reposant sur une force de friction, qui est commandé par un dispositif (6) électronique de commande et qui a au moins un dispositif (18) de frein à disque, qui est associé à une roue ou à un essieu (4), qui est fixé à un train (2) de roulement par une console (34) et qui comprend au moins une garniture (30) de frein entrant en contact de friction avec un disque (24) de frein pour le serrage du frein et sortant du contact de friction pour le desserrage du frein, un étrier (28) de frein relié à la au moins une garniture (30) de frein, ainsi qu'un boîtier (32) de frein, sur lequel est monté l'étrier (28) de frein, dans lequel, au contact de friction de la au moins une garniture (30) de frein avec le disque (24) de frein, il est produit une force ($F_{HR}$) de freinage de friction et/ou un couple ($M_{HR}$) de freinage de friction,

b) un dispositif (48) à capteur, qui comprend au moins un capteur qui relève directement ou indirectement la force ($F_{HR}$) de freinage de friction et/ou le couple ($M_{HR}$) de freinage de friction ou une grandeur déduite de la force ($F_{HR}$) de freinage de friction et/ou du couple ($M_{HR}$) de freinage de friction et produit un signal (42) électrique de force, qui dépend de la force ($F_{HR}$) de freinage de friction relevée et/ou du couple ($M_{HR}$) de freinage de friction relevé ou de la grandeur déduite relevée et l'entre dans le dispositif (6) électronique de commande, **caractérisé en ce que**

c) le boîtier (32) de frein est monté sur la console (34) d'une part en étant articulé par un montage (46) articulé et d'autre part par un appui (50) portant le au moins un capteur du dispositif (48) à capteur de manière à ce que, en raison de la force ($S_{HR}$) de freinage de friction créée par le contact de friction de la au moins une garniture (30) de frein avec le disque (24) de frein, il soit produit un couple sur le boîtier (32) de frein autour du montage (46) articulé, ainsi qu'une force de réaction qui en résulte dans l'appui (50), que le au moins un capteur du dispositif (48) à capteur mesure directement ou indirectement et le dispositif (48) à capteur produit le signal (42) de force sur la base de la force de réaction.

2. Véhicule ferroviaire suivant la revendication 1, **caractérisé en ce que** l'appui (50) est articulé par l'une des ses extrémités sur le boîtier (32) de frein et par son autre extrémité sur le train (2) de roulement de manière à constituer un bras de levier entre un axe longitudinal de l'appui (30) et le montage (46) articulé du boîtier (32) de frein.

3. Véhicule ferroviaire suivant la revendication 1 ou 2, **caractérisé en ce que** le dispositif (6) électronique de commande est constitué de manière à déterminer la force (FHR) de freinage de friction et/ou le couple (MHR) de freinage de friction ou la grandeur qui s'en déduit en fonction d'un bras de levier s'appliquant entre le montage (46) articulé et l'appui (50).

**4.** Véhicule ferroviaire suivant l'une des revendications précédentes, **caractérisé en ce que** le au moins un capteur du dispositif (48) à capteur est monté sur l'appui ou à l'intérieur de l'appui.

**5.** Véhicule ferroviaire suivant l'une des revendications précédentes, **caractérisé en ce que** le au moins un capteur du dispositif à capteur est formé d'un dynamomètre (48), comme une jauge de contrainte, ou d'un capteur opérant sur la base de la technique du film mince (TFM).

**6.** Véhicule ferroviaire suivant l'une des revendications précédentes, **caractérisé en ce que** le au moins un capteur du dispositif (48) à capteur mesure directement ou indirectement, au moins lors du freinage et/ou à l'arrêt et/ou lors du démarrage et/ou en marche du véhicule (1) ferroviaire, la force ($F_{HR}$) de freinage de friction et/ou le couple ($M_{HR}$) de freinage de friction et **en ce que** le dispositif (48) de capteur produit en fonction de cela le signal (42) de force.

**7.** Véhicule ferroviaire suivant l'une des revendications précédentes, **caractérisé en ce que** le au moins un capteur du dispositif (48) à capteur relève directement ou indirectement au moins la force ($F_{HR}$) de freinage de friction à l'arrêt maintenant le véhicule (1) ferroviaire dans un état d'arrêt détecté et/ou le couple ($M_{HR}$) de freinage de friction à l'arrêt maintenant le véhicule (1) ferroviaire dans un état d'arrêt détecté ou une grandeur d'arrêt déduite de la force ($F_{HR}$) de frein de friction d'arrêt et/ou du couple ($M_{HR}$) de frein de friction d'arrêt et le dispositif (48) à capteur produit le signal (42) de force en fonction de la force ($F_{HR}$) de freinage de friction d'arrêt relevée et/ou du couple ($M_{HR}$) de freinage de friction d'arrêt relevé ou de la grandeur d'arrêt déduite relevée et l'entre dans le dispositif (6) électronique de commande.

**8.** Véhicule ferroviaire suivant l'une des revendications précédentes, **caractérisé en ce que** le au moins un capteur du dispositif (48) à capteur relève directement ou indirectement une force ($F_{HR}$) de freinage de friction au démarrage et/ou un couple ($M_{HR}$) de freinage de friction au démarrage ou une grandeur de démarrage déduite de la force ($F_{HR}$) de freinage de friction au démarrage et/ou du couple ($M_{HR}$) de freinage de friction au démarrage, le relevé de la force ($F_{HR}$) de freinage de friction au démarrage et/ou du couple ($M_{HR}$) de freinage de friction au démarrage s'effectuant pendant un passage de l'arrêt relevé à un état de marche, dans lequel le dispositif (18) de freinage reposant sur une force de friction est passé d'un état serré régnant à l'arrêt à un état complètement desserré et **en ce que** le dispositif (48) à capteur produit le signal (42) de force en fonction de la force ($F_{HR}$) de freinage de friction au démarrage relevée et/ou du couple ($M_{HR}$) de freinage de friction au démarrage relevé ou de la grandeur au démarrage déduite relevée et l'entre dans le dispositif (6) électronique de commande.

**9.** Véhicule ferroviaire suivant la revendication 8, **caractérisé en ce que** l'état desserré complètement du dispositif de freinage reposant sur une force de friction est constaté par le dispositif (48) à capteur par le fait qu'alors la force (FHR) de freinage de friction relevée et/ou le couple (MHR) de freinage de friction relevé sont à peu près égal à zéro.

**10.** Véhicule ferroviaire suivant l'une des revendications précédentes, **caractérisé en ce qu'**il est prévu au moins ce qui suit :

a) un entraînement électrique de traction, qui est commandé par le dispositif (6) électronique de commande et qui entraîne le véhicule ferroviaire,
b) un dispositif (12) d'entrée, par lequel un signal (8) de démarrage représentant un souhait de démarrage peut être entré dans le dispositif (6) électronique de commande, dans lequel
c) dans le dispositif (6) électronique de commande est mis en œuvre une fonction d'assistance au démarrage, par laquelle un desserrage du dispositif (18) de frein reposant sur une force de friction et une activation de l'entraînement électrique de traction est commandée lors d'un passage d'un arrêt détecté à un état de marche, si le dispositif (6) électronique de commande a reçu du dispositif (12) d'entrée le signal (8) de démarrage représentant le souhait de démarrage et dans lequel
d) le dispositif (6) électronique de commande est constitué pour commander, dans le cadre de la fonction d'assistance au démarrage, le dispositif (18) de frein reposant sur une force de friction et notamment également l'entraînement en traction en fonction du signal (42) de force, s'il a reçu le signal (8) de démarrage représentant le souhait de démarrage.

**11.** Véhicule ferroviaire suivant la revendication 10, **caractérisé en ce que** le dispositif (6) électronique de commande est constitué de manière à calculer sur la base du signal (42) de force une force descensionnelle de pente s'appliquant au véhicule (1) ferroviaire ou à l'estimer et à commander, dans le cadre de la fonction d'assistance au démarrage, le dispositif (18) de frein reposant sur une force de friction et/ou l'entraînement en traction en fonction de la force descensionnelle de pente calculée ou estimée.

**12.** Véhicule ferroviaire suivant l'une des revendications précédentes, **caractérisé en ce que** le dispositif de frein reposant sur une force de friction est formé par un dispositif de frein de service actif, électropneumatique ou électrohydraulique, reposant sur une force de friction ou par un dispositif de frein à ressort accumulateur passif électropneumatique, reposant sur une force de friction ou par un dispositif de frein électromécanique, reposant sur une force de friction.

1

**Fig.1**

18

38
30
24
30

$F_N$

26

26

$F_N$

28

32

48

12
10,8
6

44
42
21
22

16
20

14
40

0

**Fig.2**

Fig.3

Fig.4

**IN DER BESCHREIBUNG AUFGEFÜHRTE DOKUMENTE**

**In der Beschreibung aufgeführte Patentdokumente**

- DE 102013008227 A1
- DE 4418791 C1
- DE 102013213618 A1
- JP H10267767 A
- DE 102009005624 A1